(19) Europäisches Patentamt / European Patent Office / Office européen des brevets

(11) **EP 3 561 082 A1**

(12) **EUROPEAN PATENT APPLICATION**
published in accordance with Art. 153(4) EPC

(43) Date of publication:
**30.10.2019  Bulletin 2019/44**

(51) Int Cl.:
*C21B 7/00* (2006.01)    *C21B 7/24* (2006.01)
*F27B 1/28* (2006.01)    *F27D 21/00* (2006.01)
*F27D 21/04* (2006.01)

(21) Application number: **17882815.8**

(22) Date of filing: **19.12.2017**

(86) International application number:
**PCT/KR2017/015032**

(87) International publication number:
**WO 2018/117605 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **22.12.2016  KR 20160176741**
**04.12.2017  KR 20170165144**

(71) Applicant: **Posco**
**Pohang-si, Gyeongsangbuk-do 37859 (KR)**

(72) Inventors:
• **CHUNG, Jin Kyung**
**Gwangyang-si**
**Jeollanam-do 57811 (KR)**

• **SON, Byung Yeon**
**Gwangyang-si**
**Jeollanam-do 57811 (KR)**
• **KIM, Seung Bo**
**Gwangyang-si**
**Jeollanam-do 57810 (KR)**
• **JANG, Hyun Ju**
**Gwangyang-si**
**Jeollanam-do 57807 (KR)**
• **YUK, Sang Seok**
**Gwangyang-si**
**Jeollanam-do 57794 (KR)**
• **KIM, Jong Hyun**
**Gwangyang-si**
**Jeollanam-do 57806 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **GAS TREATMENT APPARATUS AND OPERATION METHOD USING SAME**

(57)    The present invention provides a gas treatment apparatus and an operation method using the same, the gas treatment apparatus comprising: a cylindrical body which can pass through a container for a to-be-treated material and has openings that can be exposed within the container; reception tubes which are connected to the openings respectively so as to introduce gas from the container; first detectors which are installed in the reception tubes, respectively; second detectors which are connected to the reception tubes, respectively; gas purifiers which are connected to the reception tubes, respectively; a third detector which is connected to the gas purifiers; and a calculation unit which can calculate the heat values of gas according to a plurality of positions by using temperatures and flow rates of the gas, detected by the first detectors and the second detectors, and can calculate utilization rates of the gas according to the plurality of positions by using a component detection result of the gas detected by the third detector, whereby the gas can be received from the container for a to-be-treated material and effectively purified, and various states of the gas can be detected.

[FIG. 1]

EP 3 561 082 A1

**Description**

**TECHNICAL FIELD**

The present disclosure relates to a gas treatment apparatus and an operation method using the same, and more particularly, to a gas treatment apparatus and an operation method using the same that may introduce a gas from a container for a to-be-treated material and effectively purify the gas and may detect various states of the gas.

**DESCRIPTION OF RELATED ART**

A blast furnace is a reactor of high-temperature and high-pressure for producing molten steel. A series of processes for producing the molten steel in the blast furnace is referred to as a blast furnace treatment or a blast furnace process. The process is as follows. Blast furnace charging materials, such as iron ore, sintered ore, and coke are charged into the blast furnace. Thereafter, hot blast and dust coal are blown into a lower portion of the blast furnace, and coke and dust coal are combusted by the hot blast to generate a reduction gas. Then, the reduction gas is transferred to an upper portion of the blast furnace to reduce and melt iron components of iron ore and sintered ore to produce molten steel.

When producing the molten steel with this process, the reduction gas should be sufficiently in contact with the iron ore and the sintered ore for increasing a process efficiency. In this case, a charging state of the blast furnace charging material must be sound to ensure that the reduction gas is sufficiently in contact with the iron ore and the sintered ore.

The fact that the charging state of the blast furnace charging material is sound means that a gap is well secured in a filling layer of the blast furnace charging material such that the reduction gas and the molten steel flow smoothly. When the state of the filling layer is not sound, a reduction gas channeling occurs.

Inside of the blast furnace is one connected space, so that there is no difference in pressure (static pressure). Therefore, conventionally, changes in temperature at various positions in the blast furnace was detected. As the temperature increases, it is deduced gas flow is concentrated. Based on this, distribution of an amount of the gas inside the blast furnace was deduced. Further, a process efficiency was evaluated based on the gas amount distribution. Then, a charging state (also referred to as a "charging distribution") of the blast furnace charging material was adjusted based on the evaluation results.

However, during the blast furnace process, position and shape of a cohesive zone (a predetermined region inside the blast furnace where the iron of the blast furnace charging material melts and having a certain temperature) change from time to time and flow rate and temperature of the gas passing the cohesive zone vary. Chemical heat quantity changes such as a reduction heat of the iron and the like may cause temperature changes in the blast furnace irrespective of the gas flow. That is, the temperature changes in the blast furnace does not guarantee the gas amount distribution, therefore, the gas amount distribution in the blast furnace may not be estimated accurately. In addition, the evaluation of the process efficiency is not accurate and the charging state of the blast furnace charging material may not be adjusted accurately.

Further, when the charging state of the blast furnace charging material is not sound, and therefore, channeling of the reduction gas occur, since the reduction gas is not used enough for the reduction of the iron and exits the blast furnace, a ratio of the reduction gas in the gas discharged from the blast furnace is high. Therefore, conventionally, the gas in the blast furnace was sampled to detect components and the efficiency of the blast furnace process was evaluated based on the ratio of the reduction gas in the gas. Then. the charging state of the blast furnace charging material was adjusted based on the evaluation results.

However, during the production of the molten steel in the blast furnace, the iron ore and coke are pulverized and a large amount of dust is generated. The large amount of dust is mixed into the gas and discharged through a top of the blast furnace with the gas. The gas containing the large amount of dust is difficult to detect components thereof. The gas may be purified using a cyclone and multiple filters. However, in this case, work is increased based on maintenance of the filter and the cyclone and the filter do not function properly when the amount of dust increases. Further, when a state of the filter is not maintained well, the filter is clogged by the dust, so that a performance of the filter is deteriorated and an amount of the purified gas becomes insufficient.

Further, the ratio of the reduction gas in gas may be quantified as a gas utilization percentage. Conventionally, a method for estimating a distribution of the gas utilization percentages based on the temperature changes in the blast furnace and evaluating the process efficiency based on the estimation result and adjusting the charging state of the blast furnace charging based on the evaluation result was also used. However, the gas utilization percentage is not simply proportional to distributions of the temperatures or gas amounts inside the blast furnace. For example, the gas utilization percentage has complicated relationships with the changes in the position and shape of the cohesive zone, the changes in the gas amounts based on the permeability condition of the cohesive zone, the distribution of the iron ore in the radial direction of the blast furnace, the amount of the gas passing the blast furnace charging material, the distribution of the temperature inside the blast furnace, and the like.

For example, in a center of the blast furnace with a high permeability because coke of a large particle size is charged thereinto, a large amount of the gas is discharged therefrom, therefore, a temperature is measured high, but a gas utilization percentage is low because there is little iron ore. On the other hand, on an inner wall side of the blast furnace with a low permeability because coke of a small particle size is charged thereinto, a small amount of the gas is discharged therefrom, therefore, a temperature is measured low and a gas utilization percentage is also low. That is, since the temperature distribution does not correspond to the gas utilization percentage on an one-to-one basis, it is difficult to accurately estimate the gas utilization percentage distribution inside the blast furnace with the temperature distribution inside the blast furnace. Therefore, it is difficult to accurately evaluate the process efficiency, and it is difficult to know how to adjust the charging state of the blast furnace charging material to achieve an optimum process efficiency.

The technologies underlying the present disclosure are disclosed in following Patent Documents.

(Patent Document 1) KR10-2003-0006123 A
(Patent Document 2) KR10-2002-0088475 A
(Patent Document 3) CN2014-103729571 A
(Patent Document 4) JP2013-019706 A
(Patent Document 5) JP2506485 B2
(Patent Document 6) KR10-1323688 B1

## DISCLOSURE

## TECHNICAL PURPOSES

The present disclosure provides a gas treatment apparatus and an operation method using the same that may introduce a gas from a container for a to-be-treated material and detect a state of the gas variously.

The present disclosure provides a gas treatment apparatus and an operation method that may introduce gases from a plurality of radially spaced locations of a container for a to-be-treated material.

The present disclosure provides a gas treatment apparatus and an operation method that may detect all of temperature, velocity, and components of a gas at each radial position of a container for a to-be-treated material.

The present disclosure provides a gas treatment apparatus and an operation method that may determine charging conditions of a to-be-treated material for each position using temperature, velocity, and components of the gas.

The present disclosure provides a gas treatment apparatus and an operation method that may efficiently purify a gas before detecting components of the gas.

The present disclosure provides a gas treatment apparatus and an operation method that may simplify a structure and an operation for purification of a gas.

## TECHNICAL SOLUTIONS

In one aspect, there is provided a gas treatment apparatus including: a hollow elongated body capable of passing through a container for a to-be-treated material and having openings defined therein exposed into the container; reception tubes respectively connected to the openings to receive gas from the container; first detectors respectively installed at the reception tubes and capable of respectively detecting temperatures of gases; second detectors respectively connected to the reception tubes and capable of respectively detecting flow rates of gases.

In one embodiment, the gas treatment apparatus may further include: gas purifiers respectively connected to the reception tubes, wherein the gas purifiers respectively purify the gases respectively received from the reception tubes using water received therein; and a third detector connected to the gas purifiers and capable of detecting components of the purified gases.

In one embodiment, the gas treatment apparatus may further include: a calculating unit for calculating a heat quantity of each of the gases at each of a plurality of positions in the container using the detected gas temperatures and the detected gas flow rates and for calculating an utilization percentage of each of the gases at each of the plurality of positions using the detection results of the components of the purified gases; and determining unit for determining a charging condition for each of the positions of a to-be-treated material of an operation using the container using the calculated heat quantity and utilization percentage of each of the gases.

In one embodiment, the gas treatment apparatus may further include: a gas feeder installed to supply purge gases respectively to the reception tubes.

In one embodiment, each of the second detectors may use each of pressures of the gases flowing through the reception tubes to detect the flow rate of each of the gases.

In one embodiment, each of the gas purifiers may further include: a gas inlet having an end thereof immersed in water; and a gas outlet spaced away from the water.

In one embodiment, each of the gas purifiers may include gas storage configured such that each of the purified gases enters and exits and is stored therein. Each of the gas storages may be connected to the gas outlet and the third detector.

In one embodiment, the container may include a blast furnace, and the gas may include a blast furnace gas containing a saturated vapor.

In one aspect, there is provided an operation method including: providing a to-be-treated material into a container for a to-be-treated material; receiving gases from a plurality of positions in the container; detecting a temperature of each of the gases received from the plurality of positions; and detecting a flow rate of each of the gases received from the plurality of positions.

In one embodiment, the operation method may further include: passing the gases received from the plurality of positions respectively through gas purifiers receiving water therein, thereby to purify the gases; and detecting components of each of the purified gases.

In one embodiment, the operation method further include: calculating a heat quantity of the gas at each of the plurality of positions using the detected gas temperature and the detected gas flow rate and calculating an utilization percentage of each of the gases at each of the plurality of positions using the detection results of the components of the purified gases; and determining a charging condition of the to-be-treated material into the container at each of the plurality of positions thereof using the calculated heat quantity and utilization percentage of each of the gases.

In one embodiment, the determining of the charging condition of the to-be-treated material at each of the plurality of positions may include: comparing the calculated heat quantity of the gas with a reference heat quantity and determining a particle size condition of the to-be-treated material to be charged to each of the positions based on the comparison result; and comparing the calculated utilization percentage of each of the gases with a reference utilization percentage and determining the particle size condition and a component content condition of the to-be-treated material to be charged to each of the positions based on the comparison result.

In one embodiment, the purifying of the gases may include: passing the gases directly through water; and collecting the gases escaped from the water.

In one embodiment, the passing of the gases directly through the water may include: cooling the gases to a temperature equal to or below a dew point to separate condensed water from the gas; and adding the separated condensed water to the water.

In one embodiment, the detecting of the components of each of the purified gases may include: temporarily storing the purified gases respectively and detecting the components of each of the temporarily stored gases. Further, the receiving of the gases may include: receiving each of the gases from the container at each of the positions thereof using reception tubes inserted into the container; and supplying purge gases respectively into the reception tubes before or after the detecting of the temperature, flow rate, components of the gases.

## TECHNICAL EFFECTS

According to the embodiment of the present disclosure, the gas may be received from the container for the to-be-treated material and the various states of the gas may be detected. In this connection, the gases may be received from the plurality of positions in a radial direction of the container, and temperatures, velocities, and components of the gases for each position may be all detected by the position of the container. In addition, the efficiency of the to-be-treated material process is evaluated using the temperature, velocity, and components of the gas detected for each position in radial direction of the container. Further, the charging conditions for each of the positions of the to-be-treated material may be determined based on the evaluation results and the to-be-treated material charging state may be adjusted based on the determined conditions. Thus, the efficiency of the to-be-treated material process may be improved.

For example, in the blast furnace process, the gases may be received from the plurality of positions at the upper portion of the blast furnace spaced apart from each other to detect the temperature, velocity, and components of the gas for each position. Then, the heat quantity and utilization percentage for each position may be evaluated from the detected results. Further, the charging condition for each position of the blast furnace charging material may be accurately determined such that the charging state of the blast furnace charging material is accurately determined and the heat quantity and utilization percentage of each of the gases for each position in the blast furnace have desired values. Thereafter, the charging state of the blast furnace charging material is adjusted based on the determined condition, and the property (characteristics and state) of the blast furnace charging material may be controlled for each position in the blast furnace. From this, an efficiency of the blast furnace process and a quality of molten steel produced in the blast furnace process may be improved.

Further, according to the embodiment of the present disclosure, the gas may be efficiently purified before detecting the components of the gas and structure and operation method for purifying the gas may be simplified.

For example, in the blast furnace process, the gas received from the blast furnace is passed through the gas purifier containing the water and then supplied to a component analyzer for detecting the component of the gas. In this connection, the gas may directly pass through the water in the gas purifier to remove the impurities contained in the gas. Therefore, even though the amount of the impurities increases sharply, the water in the gas purifier sufficiently covers it, so that the purification efficiency of the gas may be optimized and the purification quality may be kept high at all times. That is, after the gas is purified cleanly, the clean gas may be supplied smoothly to the component analyzer, so that the result of the gas component detection may be accurate. Thereafter, the efficiency of the blast furnace process may be accurately evaluated based on the detection result and the charging condition of the blast furnace charging material for each position may be optimally designed. Thus, when the receiving of the gas is initiated, the water required for the gas purifier may be permanently replenished from superheated steam. Thus, the installation structure and operation method of the gas purifier may be simplified and burden on a worker may be reduced.

## BRIEF DESCRIPTION OF THE DRAWINGS

FIG. 1 is a schematic view illustrating that a gas treatment apparatus is mounted in a container for a to-be-treated material according to an embodiment of the present disclosure.

FIG. 2 is a schematic view illustrating a portion of a gas treatment apparatus according to an embodiment of the present disclosure.

FIG. 3 is a schematic view illustrating remaining portions of a gas treatment apparatus according to an embodiment of the present disclosure.

FIG. 4 is a schematic view illustrating a gas purifier according to an embodiment of the present disclosure.

FIG. 5 is a schematic view illustrating a portion of a gas purifier according to each of an embodiment and a variant of the present disclosure.

FIG. 6 is a graph illustrating a distribution of gas temperatures and gas utilization percentages within a container for a to-be-treated material obtained using a gas treatment apparatus according to an embodiment of the present disclosure.

FIG. 7 is a state diagram for illustrating a method for controlling a property of a to-be-treated material charged into a container for a to-be-treated material in an operation method according to an embodiment of the present disclosure.

## DETAILED DESCRIPTIONS

Hereinafter, an embodiment of the present disclosure will be described in detail with reference to the accompanying drawings. However, the present disclosure is not limited to the embodiments disclosed below, but may be embodied in various different forms. The embodiment of the present disclosure is merely provided to complete understanding of the present disclosure and to give the person of ordinary knowledge in the field a complete indication of the scope of the invention. The drawings may be exaggerated to illustrate embodiments of the present disclosure in detail. The same reference numbers in the drawings designate the same elements.

A gas treatment apparatus and an operation method using the same according to embodiments of the present disclosure may introduce a gas from a plurality of positions spaced apart from each other in a radial direction of a container for a to-be-treated material and may detect a state of the gas for each position in the radial direction of the container for the to-be-treated material. Further, the gas treatment apparatus and the operation method using the same according to embodiments of the present disclosure proposes technical features that may introduce a gas from a container for a to-be-treated material and effectively purify the gas and may detect the state of the gas variously.

The gas treatment apparatus and the operation method using the same according to embodiments of the present disclosure will be described in detail based on a blast furnace process.

In one example, the gas treatment apparatus and the operation method using the same according to embodiments of the present disclosure may be variously applied to detecting various states by receiving the gas from the container for the to-be-treated material in various to-be-treated material processes using the container for the to-be-treated material in various industries.

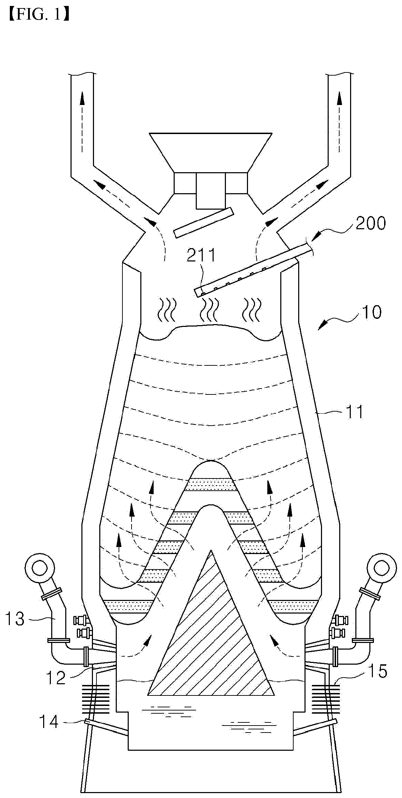

FIG. 1 is a schematic view illustrating that a gas treatment apparatus is mounted in a container for a to-be-treated material according to an embodiment of the present disclosure.

Hereinafter, a container for a to-be-treated material according to an embodiment of the present disclosure will be described with reference to FIG. 1.

A container for a to-be-treated material (hereinafter referred to as a container 10) according to an embodiment of the present disclosure is a container that may receive and treat a to-be-treated material therein. The container 10 includes, for example, a blast furnace of a steel mill. The container 10 may include a main body 11, a tuyere 12, a hot blast feeder 13, a tapping hole 14, and a molten steel surface level meter 15. The main body 11 may be a cylindrical steel plate having a space defined therein. A refractory wall may be built up on an inner surface of the steel plate. A charge hole may be defined in a top face of the main body 11. A to-be-treated material may be charged into the main body 11 through the charging hole. The main body 11 may have the tuyeres 12 radially formed at a lower portion thereof. The tuyeres 12 may be connected to the hot blast feeder 13.

The hot blast feeder 13 may be formed in a ring shape around the lower portion of the main body 11. A plurality of tapping holes 14 may be defined passing through the lower portion of the main body 11 at a height lower than that of the tuyeres 12. The molten steel surface level meter 15 may be formed at the lower portion of the main body 11 between the tuyeres 12 and the plurality of tapping holes 14. The molten steel surface level meter 15 uses stress or current transmitted to the main body 11 to measure a surface level of molten steel stored at the lower portion of the main body 11. The container 10 may include various containers for the to-be-treated material in addition to the blast furnace.

Hereinafter, a treatment process using the container 10, that is, a blast furnace process will be described.

The to-be-treated material is charged into the main body 11. In this connection, the to-be-treated material may be a blast furnace charging material such as iron ore, sintered ore, coke, and the like. Then, hot blast and dust coal are blown through the tuyeres 12 to the lower portion of the main body 11. The coke and dust coal are combusted using the hot blast to generate a reduction gas at the lower portion of main body 11. The reduction gas may include a carbon monoxide gas and a hydrogen gas. The reduction gas is moved to an upper portion of the main body 11 and is brought into contact with the iron ore and the sintered ore. The reduction gas is used to reduce and melt iron components of the iron ore and sintered ore to produce molten steel. The molten steel is stored at the lower portion of the main body 11. After a certain period of time, the tapping holes 14 are opened and the molten steel is discharged therethrough.

In order to increase an efficiency of the blast furnace process, the reduction gas generated at the lower portion of the container 10 should smoothly move to an upper portion of the container 10 and be in good contact with the to-be-treated material. In order for the reduction gas to make good contact with the to-be-treated material, a charging state of the to-be-treated material should be sound.

An example of the charging state of the to-be-treated material will be described. Large coke is mainly charged for secure permeability in a vicinity of a central portion of the container 10 around a central axis (not shown) in a vertical direction, passing through a center of the container 10. Small sintered ore is mainly charged in a peripheral portion (also referred to as a "small particle portion") of the container 10 to protect the main body 11 from a high temperature reduction gas. Large iron ore and large sintered ore are mainly charged in a middle portion between the central portion and the peripheral portion. The to-be-treated material may be charged as described above to have a uniform permeability. In the charging state of the to-be-treated material, a reduction reaction of the iron component by the reduction gas occurs actively in the middle portion.

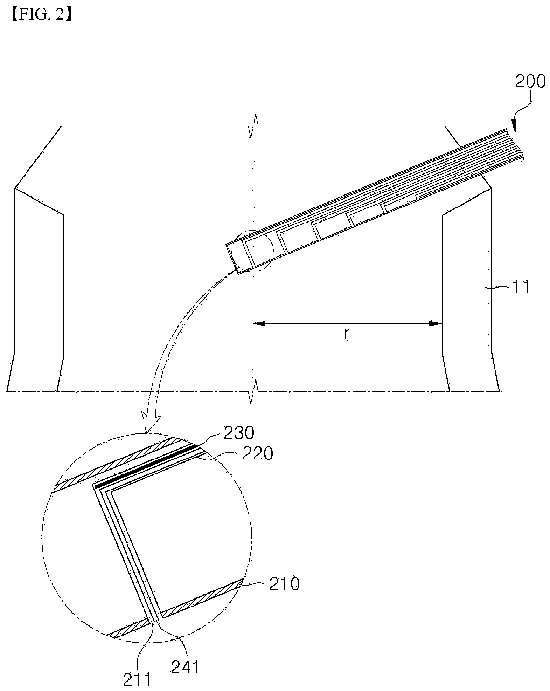

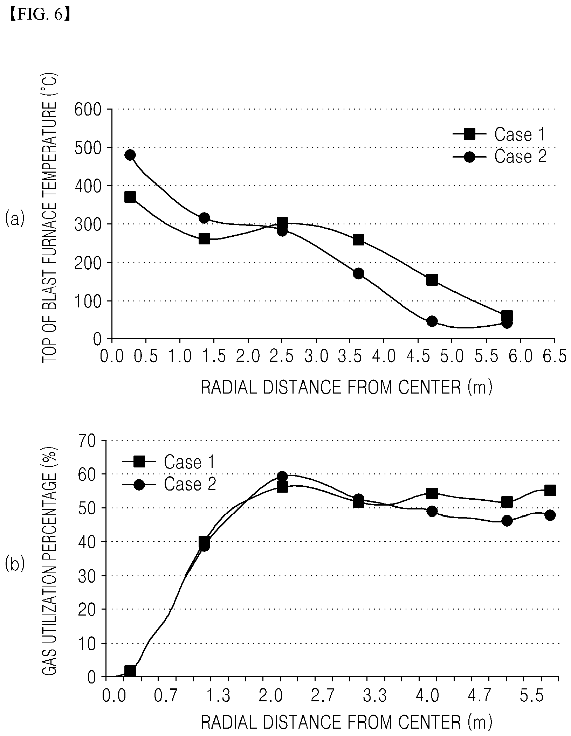

FIG. 2 is a schematic view illustrating a portion of a gas treatment apparatus according to an embodiment of the present disclosure, and more specifically, illustrating a gas treatment apparatus 200 inserted into a top of the blast furnace, (a) in FIG. 6 is a graph illustrating a distribution of gas temperature within a container obtained during a blast furnace process using a gas treatment apparatus according to an embodiment of the present disclosure. In this case, Case 1 in the drawing is a radial temperature distribution at one time point in the blast furnace process and Case 2 is a radial temperature distribution of another time point after said one time point.

With reference to FIG. 2 and (a) in FIG. 6, with respect to the radial direction r of the container 10, a temperature around the central portion is the highest and a temperature around the peripheral portion is the lowest. A reason why the temperature around the central portion is the highest is that because coke main charging for only charging the large coke is performed at the central portion, a high temperature reduction gas generated at a combustion zone (a predetermined region in the blast furnace where the coke among the blast furnace charging material is combusted) is discharged to the central portion. A reason why the temperature around the peripheral portion is the lowest is as follows. Since small sintered ore having a size of about 5 to 10 mm is charged in around the peripheral portion, particularly, at the inner wall side of the main body 11, a ventilation resistance is relatively large, and therefore, a small amount of the high temperature reduction gas is discharged.

Therefore, the temperature distribution in the radial direction r of the container 10 has a shape in which the temperature of the central portion is high and the temperature of the peripheral portion is low. However, the permeability does not have a constant pattern in the radial direction r of the container 10. The permeability changes in the radial direction r depending on a staking shape of the blast furnace charging material, for example, a charging thickness of the blast furnace charging material and a mixing degree of the iron ore, sintered ore, and coke in the blast furnace charging material, that is, a distribution shape of the charged to-be-treated material. As a result, gas velocity and temperature change in the radial direction r of the container 10.

According to the embodiment of the present disclosure, in order to increase the efficiency of the blast furnace process, various states of a blast furnace gas (hereinafter, referred to as a gas) discharged through the top of the main body 11 during the blast furnace process are detected and the detection results may be used in combination to evaluate a process efficiency for each of the positions in the radial direction r. A charging condition for each of the positions of the to-be-treated material may be determined based on the detection results. In this connection, the gas treatment apparatus 200 according to the embodiment of the present disclosure may be used to perform this series of processes.

Further, when the charging condition for each position of the to-be-treated material is determined, the charging state of the blast furnace charging material may be adjusted in a current blast furnace process accordingly.

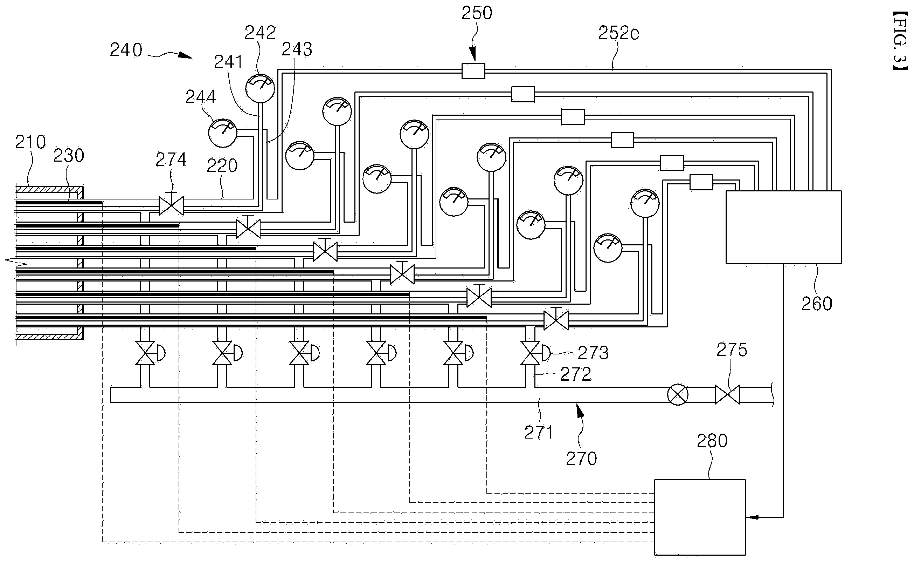

FIG. 3 is a schematic view illustrating remaining portions of a gas treatment apparatus according to an embodiment of the present disclosure. That is, FIG. 3 is a schematic view illustrating portions of the gas treatment apparatus located outside the blast furnace.

The gas treatment apparatus 200 according to the embodiment of the present disclosure will be described with reference to FIGS. 1 to 3.

The gas treatment apparatus 200 according to the embodiment of the present disclosure may be mounted to penetrate the upper portion of the main body 11. The gas treatment apparatus 200 may be mounted in the radial direction r, and the number thereof may be at least one. When there the gas treatment apparatus 200 includes a plurality of gas treatment apparatus, the plurality of gas treatment apparatus may be arranged radially. The gas treatment apparatus 200 may be used to detect the various states of the gas flowing at the plurality of positioned radially spaced apart from each other in the main body 11 at a time.

The gas treatment apparatus 200 according to the embodiment of the present disclosure includes a hollow elongated body 210 capable of passing through the container 10 and having openings 211 defined therein that may be exposed in the container 10; reception tubes 220 respectively connected to the openings 211 to introduce gases from the container 10; first detectors 230 respectively installed at the reception tubes 220 and capable of respectively detecting temperatures of the gases; second detectors 240 respectively connected to the reception tubes 220 and capable of respectively detecting flow rates of the gases.

The hollow elongated body 210 extends in the radial direction r and is removably mounted passing through the upper portion of the container 10 in the radial direction r. In addition, at least one side of the hollow elongated body 210 may be positioned inside the container 10. The openings 211 may be defined at one side of the hollow elongated body 210. The openings 211 may be exposed in the container 10. The openings 211 may introduce the gas from the plurality of positions in the container 10. The openings 211 may penetrate an outer circumferential face of the hollow elongated body 210 and may be spaced apart from each other in the radial direction r.

The hollow elongated body 210 may protect the reception tubes 220. The hollow elongated body 210 may position respective inlets of the reception tubes 220 at a plurality of positions in the radial direction r in the container 10 and align the respective inlets of the reception tubes 220 in the radial direction r. The reception of the gas from the container 10 to the openings 211 may be made naturally from the container 10 of the high pressure to the reception tube 220 at the low pressure by a difference in pressures between the container 10 and the reception tube 220.

The reception tubes 220 may be connected to the openings 211 to introduce the gas from the container 10, respectively. The number of the reception tubes 220 is equal to the number of the openings 211 and may be, for example, six. Thus, the reception tubes 220 may introduce the gas at six positions inside the container 10. The number may vary. The reception tubes 220 extend passing through the other side of the hollow elongated body 210 and into the interior of the hollow elongated body 210. The reception tubes 220 may be mounted respectively in the openings 211. The inlet side of each of the reception tubes 220 is positioned inside the hollow elongated body 210. The outlet side of each of the reception tubes 220 may be positioned outside the hollow elongated body 210 and outside the container 10.

The respective inlets of the reception tubes 220 are radially spaced apart from each other in the radial direction r along the outer circumferential face of the hollow elongated body 210 and are exposed to the interior of the container 10 through the openings 211. An inlet of at least one of the reception tubes 220 may be vertically aligned with the vertical central axis.

The gas passes through the openings 211 inside the container 10) and then flows into the respective inlets of the reception tubes 220. Then, the gas flows along the interior of the reception tubes 220 and may be discharged to the respective outlets of the reception tubes 220. In this connection, a gas at each position in the radial direction of the container 10 may be introduced into each of the reception tubes 220. Further, the outlets of the reception tubes 220 may be respectively connected to gas purifiers 250, which will be described below.

The first detectors 230 are installed at the reception tubes 220, respectively. Each of the first detectors 230 detects a temperature of the gas flowing inside each of the reception tubes 220. The first detectors 230 may be, for example, thermocouples, or may be various temperature detectors. Each of the first detectors 230 may be installed inside of each of the reception tubes 220, but close to each of the inlet sides. The first detectors 230 may be connected to a calculating unit 280, which will be described below. Each of the first detectors 230 may output the temperature value of the gas introduced at each of the radial positions of the container 10 to the calculating unit 280.

The second detectors 240 are connected to the reception tubes 220, respectively. Each of the second detectors 240 may detect the flow rate of the gas. In this connection, each of the second detectors 240 may be introduced into each of the reception tubes 220 to detect the flow rate of the gas using a pressure of the gas flowing therein. Specifically, each of the second detectors 240 may directly detect the gas flow rate using a pitot tube.

Each of the second detectors 240 may include a pitot tube 241, a dynamic pressure meter 242, a static pressure tube 243, a static pressure meter 244, and a flow rate detector (not shown). Each pitot tube 241 is installed inside each of the reception tubes 220 passing through a predetermined position at the outlet side of each of the reception tubes 220. One end of each of the pitot tubes 241 is located within the each of the inlets of the reception tubes 220. In this connection, one end of each pitot tube 241, each of the inlets of the reception tubes 220, and each of the opening 211 are coaxially aligned with each other. The other end of each of the pitot tubes 241 is located outside each of the reception tubes 220. Each of the dynamic pressure meters 242 is mounted at the other end of each of the pitot tubes 241. Each of the static pressure tubes 243 is mounted passing through each of outlet-side outer circumferential faces of the reception tubes 220. Each of inlets of the static pressure tubes 243 abuts each of inner circumferential faces of the reception tubes 220. Each of the static pressure meters 244 are connected to each of the outlets of the static pressure tubes 243. The pitot tube 241 may have a diameter of 1/8 inch. Each of the flow rate detectors may be coupled to the dynamic pressure meter 242 and the static pressure meter 244. The flow rate detector detects a flow rate of the gas using a dynamic pressure detection value of the gas and a static pressure detection value of the gas. The flow rate detector is connected to the calculating unit 280. Each of the flow rate detectors may output, to the calculating unit 280, a flow rate value of the gas received from each radial position of the container 10.

Further, the flow rate detector detects the gas flow rate value using a following Relation 1.

$$\text{Relation 1)} \ V = c[2g \times (P_d \div \rho)]^{1/2}$$

In this connection, V is a flow rate value, c is a pitot tube constant, g is a gravitational acceleration, $P_d$ is a difference in pressures between the static pressure and the dynamic pressure, and $\rho$ is a gas density. That is, each of the flow rate detectors may detect the flow rate value for each position using the difference in the pressures between the static pressure and the dynamic pressure.

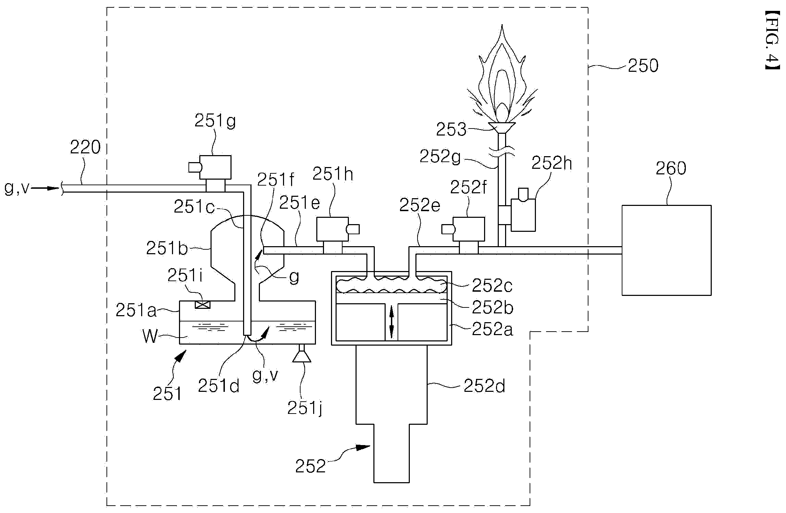

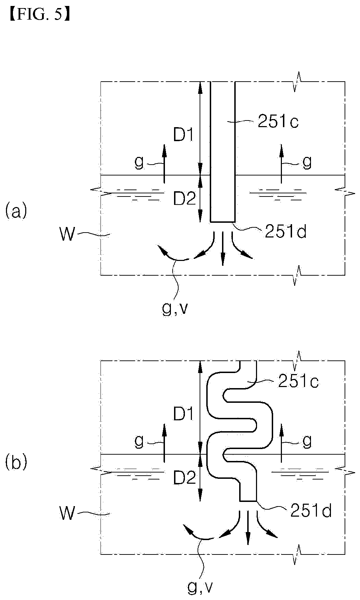

FIG. 4 is a schematic view illustrating a gas purifier according to an embodiment of the present disclosure. (a) and (b) in FIG. 5 are schematic views respectively illustrating a portion of a gas purifier according to each of an embodiment and a variant of the present disclosure.

Referring to FIGS. 1 to 5, the gas treatment apparatus 200 according to the embodiment of the present disclosure may include: the gas purifiers 250, each of which is connected to each of the reception tubes 220 and uses water received therein to purify the gas received from each of the reception tubes 220; and a third detector 260 connected to the gas purifiers 250 and capable of detecting components of the purified gases.

When the components of the gas are detected and the gas utilization percentage (see a following Relation 2) is obtained, the charging state of the blast furnace charging material may be diagnosed and the process efficiency may be evaluated.

$$\text{Relation 2)} \ \text{gas utilization percentage} = (CO_2 \ \text{content})/\{(CO \ \text{content}) + (CO_2 \ \text{content})\}$$

When the gas utilization percentage is close to 1, the reduction reaction by the reduction gas is smooth and the charging state of the blast furnace charging material is sound.

Therefore, during the blast furnace process, it is essential to detect the components of the gas. However, the gas may not accurately perform the component detection because the gas contains a large amount of impurities such as dust.

For example, when an infrared ray is used to detect the gas components, the impurities act as noise. The components must be detected after removing the impurities to clean the gas for obtaining accurate and stable results. Meanwhile, the reduction gas contains carbon monoxide and hydrogen, among which the hydrogen is used as the reduction gas to produce water $H_2O$.

The water should be vaporized by a high temperature in the main body 11 and be contained in a gas (hereinafter, a "gas g") in a saturated vapor state. In particular, in a case of the blast furnace, since 5 to 10% of the reduction gas is the hydrogen, a saturated vapor v may be supplied smoothly. In this case, the gas purifier 250 does not need to receive water w from the outside.

That is, the gas treatment apparatus 200 may purify the gas g using the saturated vapor v contained in the gas g received from the container 10. In this connection, the purifying of the gas g means removing the impurities from the gas g.

Meanwhile, a length of the reception tube 220 may be determined to keep the interior of the reception tube 220 at a temperature higher than a dew point. In this connection, a saturation temperature or a condensation temperature may be used instead of the dew point. Any of the above may be used as long as it may define, using the saturation temperature or the condensation temperature, a temperature higher than a temperature at which condensation of the saturated vapor v mixed in the gas g passing through the reception tube 220 is started.

As a length of the reception tube 220 becomes longer, the temperature of the gas g in the reception tube 220 decreases. Therefore, the extension length of the reception tube 220 is determined such that an internal temperature of the reception tube 220 at the outlet side of the reception tube 220 is larger than the dew point, considering, for example, an inlet side temperature of the reception tube 220, a heat transfer coefficient between the gas g and the reception tube 220, and the like. When the saturated vapor v remains in the gaseous state in the reception tube 220, the impurities may be prevented from adhering to the inner wall of the reception tube 220, thereby ensuring a smooth flow of the gas g.

Further, when the length of the reception tube 220 is determined such that the internal temperature of the reception tube 220 at the outlet side which is in contact with the gas purifier 250 approaches the dew point at a temperature higher than the dew point, after the gas g is introduced to the gas purifier 250, the saturated vapor v may be phase-changed to condensed water as the gas g rapidly cools down below the dew point.

Heat retaining means (not shown) may be provided in the reception tube 220 to keep the interior of the reception tube 220 at a temperature higher than the dew point. In this time, the heat retaining means may be various, such as a heat insulating material, a heat wire, a thermoelectric element, or the like, and is not limited thereto. The gas g flowed into the reception tube 220 may be kept at a temperature higher than the dew point using the heat retaining means. Thus, no condensed water is generated in the reception tube 220, and adhesion of the impurities may be prevented. Further, the reception tube 220 may itself contain a heat insulating material. A reception tube control valve 251g maybe installed at each of the outlet side of the reception tube 220.

The gas purifiers 250 may include the same number of gas purifiers as the reception tubes 220. For example, the gas purifiers 250 may include six gas purifiers 250. Each gas purifier 250 may be connected to each of the reception tubes 220 and may introduce the gas g from the container 10 through each of the reception tubes 220. The gas purifier 250 may purify the gas g using the water w contained therein.

Each of the gas purifiers 250 may include a gas inlet 251d having an end thereof immersed in the water w and a gas outlet 251f spaced away from the water w. In this connection, when the gas g is sprayed into the water w through the gas inlet 251d and the water w and the gas g are actively brought into contact with each other by bubbling of the gas, the impurities mixed in the gas g are collected in the water w and removed. The gas g from which the impurities have been removed passes through the water w after a predetermined time, escapes to a water surface, and is discharged to the gas outlet 251f. At this time, the saturated vapor v contained in the gas g may become the condensed water and stay in the water w.

Each of the gas purifiers 250 may include a purifying unit 251, storage 252, and a combustion unit 253. The number of the purification units 251 may be equal to the number of the reception tubes 220.

The purifying unit 251 may include: a purifying container containing the water w therein; an inflow tube 251c formed in the purifying container and having one end thereof connected to the reception tube 220 and the other end thereof immersed in the water w, wherein the gas g passes through the inflow tube 251c; a discharge tube 251e away from the water w and passing through the purifying container. The other end of the inflow tube 251 c may be the gas inlet 251d and one end of the discharge tube 251e located inside the purifying container may be the gas outlet 251f.

The purifying container may include: a first purifying container 251a in which the water w is received and the other end of the inflow tube 251c is located; and a second purifying container 251b connected to a top face of the first purging container 251 a and through which the discharge tube 251e penetrates. The first purifying container 251a serves as a water tank, and the gas g in the first purifying container 251a may be bubbled in the water w and purified. The second purifying container 251b collects the gas g escaped from the water w.

The inflow tube 251c may extend vertically across the second purifying container 251b, and the other end thereof may be immersed in the water w. The inflow tube 251c serves to guide the gas g into the water w and serves to cool the gas g to a temperature below the dew point. The saturated vapor v may be phase-changed to the condensed water in the inflow tube 251c. To this end, a length of the inflow tube 251c may be determined to cool interior of the inflow tube 251c to the temperature below the dew point.

A length of the inflow tube 251c may be determined such that a length of an air-cooling portion D1 and a length of a water-cooling portion D2 is different from each other, as shown in (a) in FIG. 5. The air-cooling portion length D1 may be determined to be longer than the water-cooling portion length D2 or vice versa, and in one example, the two lengths may be determined to be the same. This may be determined based on the temperature of the gas g at an upper portion of the inflow tube 251c and a degree of cooling of the gas g at each portion of the inflow tube 251 c.

As a variant, a shape of the inflow tube 251c may be a curved tube shape as shown in (b) in FIG. 5. When a pressure of gas g passing through the inflow tube 251c is high enough to neglect the adhesion of the impurities by the condensed water, the shape of the inflow tube 251c may be the curved tube shape in order to improve a cooling efficiency. A structure of (a) in FIG. 5 is referred to as a direct tube type. In this case, the condensed water may be easily drained and the gas g may inflow smoothly.

Further, the inflow tube 251c may have cooling means (not shown). The cooling means may be a cooling fin, a heat pump, a thermoelectric element, or the like, and is not limited thereto.

The purifying unit 251 may include: a water level sensor 251i mounted on one side of the first purifying container 251a; and a drain port 251j connected to the other side of the first purifying container 251a. When the saturated vapor v is condensed and the water w is replenished, a water level rises. In this connection, the water level detection sensor 251i senses the water level of the water w and opens and closes a drain valve (not shown) of the drain port 251j such that an appropriate water level is maintained in the first purifying container 251a.

The other end of the discharge tube 251e may extend outwardly of the purifying container and be connected to the storage 252. A discharge valve 251h may be mounted on the discharge tube 251e.

The gas purifier 250 further includes: a dispersing member (not shown) disposed to be immersed in the water w inside the first pumping container 251a; and flowing means (not shown) formed to vibrate or rotate the dispersing member using the bubbling of the gas g in the water w.

For example, the dispersing member may be a dispersion plate having a plurality of through holes defined therein or an impeller having a plurality of propellers. When the dispersing member is the dispersion plate, the dispersion plate may be disposed in a predetermined direction in a bubbling region of the gas g and be supported by the flowing means. In this connection, the flowing means may be a spring connecting the dispersion plate and the first purging container 251a or the inflow tube 251c, or a buoy disposed on the water surface of the water w and connected to the dispersion plate. The gas g may be dispersed into small bubbles while passing through the dispersion plate during the bubbling. When the dispersing member is the impeller, the flowing means may be a bearing. In this connection, the bearing is mounted around the inflow tube 251c, and the impeller may be mounted on the bearing. The impeller is rotated by the bubbling, and the bubbles of the gas g may be crushed into small sizes. The dispersing member and the flowing means may be of various structures that crush the bubbles of the gas g into the small sizes.

The purifying unit 251 has a simpler installation structure than a water treatment apparatus such as a Bischoff or a wet scrubber, and is easy to operate. The water may be permanently replenished by receiving the condensed water from the saturated vapor v contained in the gas g while purifying the gas g. Thus, the purifying unit 251 does not require the installation space required for additional supply of the water and takes up less installation space. Further, even though the water is not replaced periodically, the water w is always added by the condensed water and is purified by itself, and a purification efficiency of the water w may be kept high. In this connection, the water level of the water w is regulated by the drain port 251j. On the other hand, since the above-mentioned water treatment apparatuses are required to be continuously supplied with the water, a corresponding installation space is further required.

Each of the storages 252 is formed such that the purified gas g may enter and exit each of the storages 252 and may be stored in each of the storages 252. Each of the storages 252 may be connected to the gas outlet 251f and the third detector 260. The storage units 252 may include the same number of storage units as the number of the purifying units 251. The storages 252 temporarily stores the gas g therein and supplies the stored gas g to the third detector 260.

The storage 252 includes: a gas chamber 252a having an internal space therein; a cylinder 252b movably installed inside the gas chamber 252a; a storage member 252c disposed between a head portion of the cylinder 252b and the gas chamber 252a and being penetrated by the other end of the discharge tube 251e, and expanding and contracting based on a degree of storage of the gas g; a cylinder actuator 252d mounted on the gas chamber 252a at a rod side of the cylinder 252b for forcing the expansion and contraction of the storage member 252c by moving the cylinder 252b; a feeding tube 252e having one end thereof penetrating the gas chamber 252a to communicate with the storage member 252c and the other end thereof mounted on the third detector 260; and a supply valve 252f mounted on the feeding tube 252e. The storage member 252c may be a diaphragm or an elastic membrane.

The storage 252 connects the purifying unit 251 and the third detector 26 with each other. The storage 252 stores the gas g in the storage member 252c and supplies the stored gas g to the detector 250 when necessary. When the discharge valve 251h is opened, the purified gas g is introduced into the storage member 252c and the cylinder actuator 252d retreats the head of the cylinder 252b to induce the expansion of the storage member 252c. At this time, the supply valve 252f may be in a closed state. Thereafter, at a predetermined time, the supply valve 252f is opened and the gas g is supplied to the third detector 260. At this time, the discharge valve 251e is in opened or blocked state, and the cylinder actuator 252d maintains the retreated state of the head of the cylinder 252b or advances the head of the cylinder 252b to induce the contraction of the storage member 252c. The gases received from the plurality of positions may be simultaneously purified and stored by the storage 252.

An emergency tube 252g is mounted passing through the feeding tube 252e at a downstream side of the supply valve 252f and an emergency valve 252h is mounted on the emergency tube 252g. The combustion unit 253 is mounted on an end of the emergency pipe 252g. When the blast furnace process is terminated or the gas g is to be discharged to an outside air as required, the emergency valve 252h is opened for inducing the gas g to the emergency tube 252g and the combustion unit 253 is operated for combusting the gas g to be discharged to the outside air and removed. The cylinder actuator 252d, the supply valve 252e, the emergency valve 252h, and the combustion unit 253 may be controlled by a controller (not shown) for the gas purifier.

The controller for the gas purifier controls operations of the valves respectively provided in the storages 252 such that the storages 252 alternately supply the gas g to the third detector 260. For example, the controller for the gas purifier controls the supply valves 252f to operate alternately and the storages 252 alternately supply the gas g to the single third detector 260. Components of the gases at the plurality of positions received from the reception tubes 220 may be sequentially detected with the single third 3detector 260.

The third detectors 260 may be respectively coupled to the gas purifiers 250. In detail, the storages 252 may be respectively connected to the third detectors 260, and the third detectors 260 may be respectively connected to the purifying units 251 through the storage units 252. The third detector 260 may detect the components of the purified gas.

The third detector 260 may include an infrared component analyzer to detect the components of the gas. The infrared component analyzer may detect the components of the supplied gas g and variously analyze component content, volume fraction, mass fraction, mole fraction, or the like of each component. A value detected by the infrared component analyzer may be used to calculate the gas utilization percentage. Specifically, the third detector 260 samples the purified gas g to variously detect content of carbon monoxide and carbon dioxide contained in the gas g in a form of the volume fraction, mass fraction, mole fraction, or the like.

The gas treatment apparatus 200 according to the embodiment of the present disclosure may include: a calculating unit 280 that may calculate a heat quantity of the gas at each of the plurality of positions using the detected gas temperature and the detected gas flow rate and may calculate an utilization percentage of each of the gases at each of the plurality of positions using detection results of components of the purified gas; and determining unit (not shown) for determining a charging condition of the to-be-treated material of the treatment using the container 10 at each of the plurality of positions using the calculated heat quantity and utilization percentage of each of the gases.

The calculating unit 280 may calculate the heat quantity of each of the gases flowing through the reception tubes 220 using the temperature and flow rate of each of the gases flowing through the reception tubes 220 and calculate the gas utilization rate of each using the component of each of the gases flowing through the reception tubes 220.

The calculating unit 280may obtain the heat quantity of the gas using a following Relation 3.

$$\text{Relation 3) heat quantity of gas} = \text{flow rate value of gas} \times \text{loading area of to-be-treated material corresponding to a position (or flow area of gas corresponding to a position)} \times \text{gas temperature}$$

As described above, the heat quantity of the gas for each corresponding position may be calculated using the gas flow rate value, the flow area, and the temperature. For example, the inner space of the container 10 may be divided into a plurality of sections by drawing a circumference around the vertical central axis of the container 10 at the plurality of positions in the radial direction r of the container 10. Further, each of areas of the divided sections may be defined as the flow area. The plurality of sections may be disposed concentrically and correspond one-to-one to each position where the gas temperature is measured.

The calculating unit 280 obtains the utilization percentage of each of the gases using the above-described Relation 2. The gas utilization percentage is a numerical value of a degree of reduction of the iron component by the reduction gas generated at the lower portion of the container 10.

The heat quantity and the utilization percentage of each of the calculated gases may be used to determine the loading conditions of the to-be-treated material in the process using the container 10. That is, a charging condition at which the to-be-treated material is charged to each location for achieving an optimal treatment efficiency may be determined based on the heat quantity and utilization percentage of each of the gases. Accordingly, during the process using the container 10, an optimal to-be-treated material charge distribution adjustment plan may be obtained rapidly and accurately. This is performed by the determining unit. That is, the determining unit may be used to determine the loading conditions of the to-be-treated material in the process (also referred to as a "treatment") using the container for the to-be-treated material based on the heat quantity and utilization percentage of each of the gases.

The gas treatment apparatus 200 according to the embodiment of the present disclosure may include a gas feeder 270 installed to supply purge gases respectively to the reception tubes 220.

The gas feeder 270 prevents dust from accumulating inside the reception tubes 220 and cleans the first and second detectors 230 and 240.

The gas feeder 270 may include a purge gas feeding tube 271, a supply branch tube 272, a first valve 273, a second valve 274, and a main valve 275. The feeding tube 271 is a main tube through which the purge gas inflows, and the purge gas may be supplied from a purge gas container (not shown). The supply branch tube 272 may include a plurality of supply branch pipes for connecting the reception tubes 220 and the feeding tube 271 with each other, respectively. Each first valve 273 is mounted on each of the supply branch tubes 272. Each second valve 274 is mounted on each of the reception tubes 220 at each of positions spaced from each of supply branch tubes 272 and disposed toward each of the outlet sides of the reception tubes 220. The main valve 275 is mounted on the feeding tube 271 at an upstream side of the purge gas flow. Further, an automatic valve is mounted on the feeding tube 271 away from the main branch 275 toward the supply branch tube 272. The automatic valve may rapidly shut off the feeding tube 271 in case of emergency.

The first valve 273 and the second valve 274 are controlled such that an opened or closed state of the first valve 273 is opposite to an opened or closed state of the second valve 274. The second valve 274 is blocked when the first valve 273 is opened and the second valve 274 is opened when the first valve 273 is blocked. Operations of these valves are controlled by a controller (not shown) for purge gas supply. The controller for the purge gas supply controls the first valve 273 and the second valve 274 and such that the gas and the purge gas alternately flow in the reception tubes 220 and controls the gas feeder 270 to operate alternately with the first detector 230, the second detector 240, and the third detector 260. Further, the first detector 230, the second detector 240, and the third detector 260 operate together or simultaneously.

A controlling method of the controller for the purge supply is described below. The controller for the purge gas supply opens the first valve 273 and blocks the second valve 274 while stopping operations of the first detector 230, the second detector 240, and the third detector 260. Accordingly, cleaning may be performed by spraying the purge gases into the reception tubes 220. Thereafter, the controller for the purge gas supply blocks the first valve 273 to stop the purge gas spraying and opens the second valve 274 to resume the operations of the first detector 230, the second detector 240, and the third detector 260. This is repeated at regular time intervals. Therefore, the interior of the reception tubes 220 may be cleaned at the regular time intervals. For example, after reception of the gas for 15 minutes, the reception tubes 220 are cleaned once, then the gases are respectively introduced into the reception tubes 220 again for 15 minutes. The above processes may be repeated such that the dust may be prevented from adhering to the reception tubes 220.

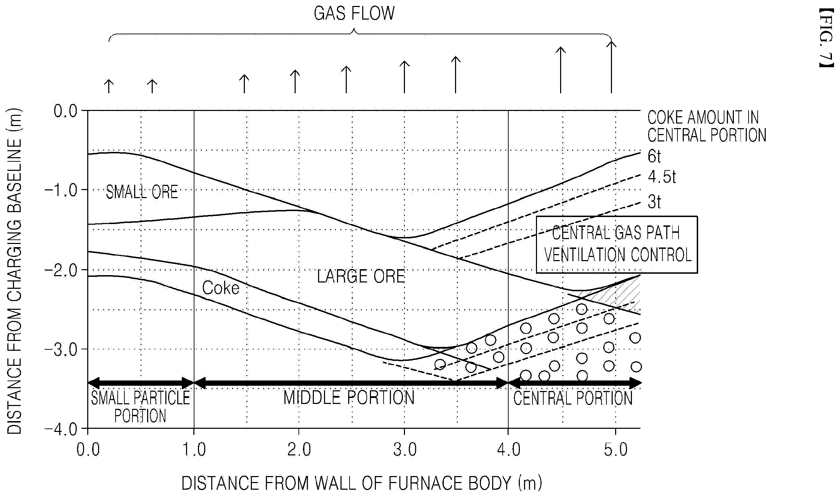

(b) in FIG. 6 is a graph illustrating a distribution of gas utilization percentages within a container for a to-be-treated material obtained using a gas treatment apparatus according to an embodiment of the present disclosure. In this connection, Case 1 in the drawing is a distribution of gas utilization percentages in a radial direction at one time point during the blast furnace process and Case 2 is a distribution of gas utilization percentages in the radial direction at another time point after the one point. FIG. 7 is a state diagram for illustrating a method for controlling a property of a to-be-treated material charged into a container for a to-be-treated material in an operation method according to an embodiment of the present disclosure.

Referring to FIGS. 1 to 7, an operation method according to an embodiment of the present disclosure will be described in detail. In this case, a description overlapping with the description of the gas treatment apparatus described above will be briefly described or omitted.

The operation method according to the embodiment of the present disclosure includes: preparing the to-be-treated material in the to-be-treated material container; receiving the gases from the plurality of positions in the container; detecting the temperature of each of the gases received from the plurality of positions; and detecting the flow rate of each of the gases received from the plurality of positions.

The to-be-treated material is provided in the container 10. The blast furnace charging material is charged into the blast furnace. The container 10 may include the blast furnace for producing the molten steel, and the to-be-treated material may include the blast furnace charging material. Referring to FIG. 7, the blast furnace charging material is divided into small and large ores based on to particle size.

The large coke is mainly charged in the central portion and the large ore (including large sintered ore and large iron ore) is mainly charged in the middle portion. In addition, small ore (including small sintered ore and small iron ore) is mainly charged in the small particle portion.

For example, small ore having a particle size of 10 mm or below is charged in the small particle portion, large ore having a particle size of 10 to 25 mm is charged in the middle portion, and large coke of 50 to 60 mm is charged in the central portion. Due to the above charging distribution, the gas flow in the container may be distributed as indicated by arrows at a top of the drawing.

Thereafter, the hot blast is injected into the lower portion of the container 10 to treat the to-be-treated material. For example, the hot blast and the dust coal are injected into the lower portion of the container 10 through the tuyere 12. The hot blast combusts the coke and the dust coal to produce the reduction gas. As the reduction gas moves to the upper portion of the container 10, the reduction gas is brought into contact with the iron ore and the sintered ore and reduces and melts the iron ore and the sintered ore to produce the molten steel.

In this connection, the hollow elongated body 210 is inserted into the top of the blast furnace of the container 10 and aligns the respective inlets of the reception tubes 220 in the radial direction r around the vertical central axis. Thereafter, the gases are introduced respectively from the plurality of positions in the container 10 through the reception tubes 220. That is, during the process of treating the to-be-treated material, the gas g is discharged through the top of the blast furnace of the container 10. The hollow elongated body 210 mounted at the upper portion of the container 10 is used to introduce the gas g from the container 10. In this connection, the gas g contains the saturated vapor v, and the impurities are mixed in the gas g.

While receiving the gas g, the temperature of the gas g is retained to a temperature higher than the dew point. This is to prevent the condensed water from forming inside the reception tube 220 connecting the hollow elongated body 210 and the gas purifier 250.

In the receiving of the gas, the reception tubes 220 inserted into the container 10 by the hollow elongated body 210 are used to introduce the gases from the plurality of positions. In this connection, the plurality of positions are the plurality of positions in the radial direction r.

Each of the temperatures of the gases received from the plurality of positions is detected using the first detectors 230. Further, each of the flow rates of the gases received from the plurality of positions is detected using the second detectors 250. In this connection, the plurality of positions are the plurality of positions in the radial direction r. In (a), (b) in FIG. 6 and FIG. 7, it may be seen that a small particle portion side has a lower temperature, a higher gas utilization percentage, and a low flow rate than the central portion.

According to the embodiment of the present disclosure may include: passing the gases received from the plurality of positions respectively through the gas purifiers receiving water therein to purify the gases; and detecting the components of each of the purified gases after the receiving of the gases from the plurality of positions in the container. In this connection, the purification, the temperature detection, and the flow rate detection may be performed together or simultaneously, and an order thereof is not particularly limited.

The gases g received from the plurality of positions are respectively passed through the gas purifiers 250 containing the water w and purified. The purifying of the gases may include: passing the gases g directly through the water w; and collecting the gases g that has escaped from the water w. All of the impurities may be collected in the water w and removed.

Further, the passing of the gases g directly through the water w may include: cooling the gases g to the temperature equal to or below the dew point to separate the condensed water from the gas g; and receiving the separated condensed water to replenish the water w.

At this time, the water level of the water w rises, and the water level of the water w may be appropriately regulated using the water level detection sensor 251i and the drain port 251j. Since the water w is constantly purified using the condensed water, the purification efficiency of the gas purifier 250 may be maintained at a high efficiency and the operation of the gas purifier 250 may become remarkably stable and simplified.

The components of each of the purified gases are detected. The detecting of the components of each of the purified gases includes temporarily storing the purified gases in the storage units 252 respectively and then supplying the stored purified gases to the third detector 260 to detect the components of each of the purified gases.

When receiving the gases g, the gases at the plurality of positions in the radial direction r are respectively introduced. Thus, the passing of the gases g respectively through the purifying units and the temporarily storing of the gases g are performed for each of the gases received from the plurality of positions. In this connection, the gases that has passed respectively through the purifying units 251 are temporarily stored in the storages 252 respectively. Then, when the gases are supplied to the third detector 260, the temporarily stored gases are alternately supplied to the third detector 260. Therefore, the purifying units 251 and the storage units 252 may alternately and stably supply the gases at the plurality of positions to the single third detector 260.

Further, the cleaning is performed periodically while respectively supplying the purge gases are to the reception tubes 220 using the gas feeder 270 before or after the detecting of the temperature, flow rate, components of the gases.

Subsequently, after calculating the gas heat quantity and utilization percentage for each of the positions, whether the charging state of the blast furnace charging material is sound may be determined based on the calculated gas heat quantity and utilization percentage, and the charging method may be adjusted based on the determination. That is, the optimal to-be-treated material charge distribution adjustment plan may be obtained rapidly and accurately during the blast furnace process such that the adjustment plan determines whether the charging state at each of the positions in the radial direction r of the blast furnace charging material is sound and shows the optimal process efficiency.

Thus, the charging condition may be adjusted considering various factors such as the flow rate, temperature, component, or the like based on a charging thickness of the to-be-treated material for each component and position, a change in permeability, or the like and the treatment efficiency may be quantitatively evaluated. In particular, a position in the radial direction r at which the charging condition should be adjusted to improve the treatment efficiency is quickly identified based on the flow rate and the component of each of the gases detected at the plurality of positions in the radial direction of the container 10. Then, the charging condition of the corresponding position may be determined and a prompt action may be taken. This will be described below.

The operation method according to the embodiment of the present disclosure may include: detecting the heat; detecting the flow rate; detecting the components; calculating the heat quantity of the gas at each of the plurality of positions using the detected gas temperature and the detected gas flow rate and calculating the utilization percentage of each of the gases at each of the plurality of positions using detection results of the components of the gas; and determining the charging condition of the to-be-treated material at each of the plurality of positions using the calculated heat quantity and utilization percentage of each of the gases.

The heat quantity of the gas at each of the plurality of positions is calculated using the detected gas temperature and flow rate. Then, the utilization percentage of each of the gases at each of the plurality of positions is calculated using the detection result of the gas components.

The charging condition of the to-be-treated material at each of the plurality of positions is determined using the calculated heat quantity and utilization percentage of each of the gases. The determining of the charging condition of the to-be-treated material at each of the plurality of positions may include: comparing the calculated heat quantity of the gas with a reference heat quantity; and determining a particle size condition of the to-be-treated material to be charged to the corresponding position based on the comparison result.

For example, when the heat quantity of the gas received from one position in the radial direction r of the container 10 is included in a range of reference heat quantity values, the charging condition at the to-be-treated material of the corresponding position is maintained. When the heat quantity of the gas received from the one position is below the range of the reference heat quantity values, the to-be-treated material charging condition is determined such that a charging amount of small ore among the to-be-treated material charging conditions at the corresponding positions is relatively reduced and a charging amount of large ore is relatively increased. When the heat quantity of the gas received from the one position exceeds the range of the reference heat quantity values, the to-be-treated material charging condition is determined such that the charging amount of the small ore among the to-be-treated material charging conditions at the corresponding positions is relatively increased and the charging amount of the large ore is relatively reduced.

That is, when the heat quantity of the gas corresponding to the one position in the radial direction of the container is larger than the range of the reference heat quantity values, the charging condition of the to-be-treated material is adjusted such that the gas flow rate decreases in one section in the radial direction of the container corresponding to the one position.

Further, when the heat quantity of the gas corresponding to the one position in the radial direction of the container is smaller than the range of the reference heat quantity values, the charging condition of the to-be-treated material is adjusted such that the gas flow rate increases in the one section in the radial direction of the container corresponding to the one position.

Permeability may be secured in the section in the radial direction corresponding to the position and the charging condition for allowing the gas to pass smoothly may be determined by such determining of the charging conditions. For example, when the flow rate of the gas increases or decreases more than necessary, the carbon monoxide in the gas reacts less frequently with the iron in the to-be-treated material. However, as the appropriate flow rate of the gas is secured, the gas and the to-be-treated material may be reacted with each other well in the embodiment.

In other words, an optimum condition of charging amount distribution of the small sintered ore, large sintered ore, and large lump ore in the radial direction of the container 10 may be determined based on the comparison result of the heat quantity and the reference heat quantity of the gas. When the corresponding position is the center of the container, the optimal condition of the charging amount of center coke (or large coke) may be determined.

The range of the reference heat quantity value of each of the positions may variously determined based on a specific composition of the to-be-treated material, a blast furnace volume, or a desired molten steel specification. The range of the reference heat quantity value of each of the positions differs for each treatment, therefore, is not specifically described below.

The determining of the charging condition of the to-be-treated material at each of the plurality of positions may include comparing the calculated utilization percentage of each of the gases with a reference utilization percentage and determining a particle size condition and a component condition of the to-be-treated material to be charged to the corresponding position based on the comparison result.

When the gas utilization percentage value of the gas received from the one position in the radial direction of the container 10 is lower than a desired utilization percentage value, the charging conditions of the to-be-treated material may be determined such that the gas utilization percentage becomes high. The gas utilization percentage is determined by combinations of the temperature, flow rate, reaction area, and reaction time of the gas, each of which may be coupled with each other complicatedly and influence each other.

For example, one way to increase the utilization percentage of each of the gases is to increase the gas flow rate. In this connection, when the particle size of the charging material is increased to increase the flow rate of the gas, a passage time of the gas becomes shorter, which in turn affects the utilization percentage of each of the gases. That is, factors do not act independently but have complex relationships with each other.

Therefore, the determining of the particle size condition and the component condition of the to-be-treated material includes determining the particle size condition and the component condition in a try and error method. The particle size condition of the to-be-treated material may be determined in the try and error method such that the particle size condition of the to-be-treated material has an optimal distribution point and the properties of the charging material (DRI, CBP, pellet, sized ore, and the like) are optimized. The higher the utilization percentage of each of the gases, the better the process efficiency. For example, the to-be-treated material particle size condition may be determined to maintain a process efficiency level of 50% to 60%. In one example, the to-be-treated material particle size condition may be determined to be equal to or greater than 60 %.

For example, when the gas utilization percentage of the gas received from the one position in the radial direction r of the container 10 is lower than the desired utilization percentage value (for example, 0.5 to 0.6), the to-be-treated material charging condition may be determined to increase the amount of the iron ore in the section corresponding to the position and the to-be-treated material charging condition may be determined to reduce the particle size of the iron ore. In other words, the small sintered ore may be charged more.

In this connection, when the charging amount of the small sintered ore is increased at the corresponding position, the utilization percentage of the gas may increase. In this connection, when a reaction frequency of the gas and the to-be-treat material is lowered than a certain level as the permeability of the section corresponding to the position is decreased by the small sintered ore and the gas flow rate is decreased, there is a point where the utilization percentage of the gas decreases again. This point may be grasped in real time to determine the charging conditions of the to-be-treated material when the utilization percentage of the gas reaches its peak.

The control of such charging conditions may be performed in a complex manner for each factor. In this connection, since charging condition control results may be rapidly fed back while calculating the utilization percentage of each of the gases at the positions, the optimal to-be-treated material charging conditions may be obtained.

After the charging conditions of the to-be-treated material are determined in the above-described process, the treatment may be continuously performed while controlling the charging of the to-be-treated material by reflecting the determined charging conditions to the treatment.

According to the above-described embodiment of the present disclosure, when a treatment action called the adjustment of the charging distribution of the to-be-treated material is performed to improve the treatment efficiency, the temperature, pressure, and components of the gas are detected at the plurality of positions in the radial direction of the blast furnace and an optimum treatment measure may be determined quickly and accurately using the detected temperature, pressure, and components in combination.

That is, in the blast furnace treatment, the flow rate, temperature, and components of the gases at six points in the radial direction of the blast furnace may be measured to provide data for improving the treatment efficiency. As all of the flow rate, temperature, components of the gas are used as above, the charging position and charging amount of the small sintered ore may be determined and the control of the gas flow for each of the sections in the radial direction may be effectively performed.

For example, the gas flow in the central portion may be controlled. Thus, the gas, which does not used for the reduction of the iron and discharged to the upper side of the to-be-treated material through the central portion may be reduced. In other words, as the charging amount of the coke to be charged into the central portion is changed from 6 to 3 tons, the increase and decrease of the utilization percentage and the flow rate of the gas in the small particle portion, middle portion, and the central portion of the blast furnace may be seen. Thus, whether to charge the large ore more into the middle portion or whether to charge the small sintered ore more into the small particle portion may be easily determined.

Further, when it is determined from the gas treatment apparatus 200 that the flow rate, temperature, utilization percentage of the gas on the side of the small particle portion is low, an action for slightly reducing the charging amount of the coke into the blast furnace central portion or reducing the charging amount of the small sintered ore of the small particle portion may be taken. Thus, the flow and temperature of the gas in the central portion decrease slightly, there is no change in the middle portion, and the flow and temperature of the gas slightly increase in the small particle portion. As a result of such change in the charging conditions are obtained rapidly using the flow rate, temperature, components information of the gas by the gas treatment apparatus, a scope of the action may be clearly specified and control for each position in the radial direction may be efficiently performed based on the measurement results.

Further, the improving of the treatment efficiency in the blast furnace aims at producing a large amount of the molten steel with small reducing agents. An essential requirement for achieving this goal is to evenly distribute the gas flow inside the blast furnace to increase the gas utilization percentage.

The blast furnace always has differenced in the temperatures, components, and speeds of the gases in the radial direction. Thus, there is a significant difference in the gas utilization percentages between the central and peripheral portions. In addition, softening and melting properties of the sintered ore change position and shape of a cohesive zone, which causes a sudden fluctuation in the gas utilization percentages. Therefore, it is necessary to take corrective action quickly and evaluate the result by accurately calculating the changes in the heat quantity and utilization percentage of the gas at each position in the radial direction and feeding the calculation result back to the adjustment of the distribution of the blast furnace charging material.

Thus, when, using the gas treatment apparatus 200 according to the embodiment of the present disclosure, the heat quantity and utilization percentage of the gas at each position is recognized by detecting the flow rate, temperature, components of the gas in the radial direction of the blast furnace during the treatment using the container for the to-be-treated material, the particle size, property, or the like of the to-be-treated material may be changed at a desired point, thereby improving the treatment efficiency. Particularly, in the blast furnace treatment, it is easy to locate the cohesive zone and to derive the optimal blast furnace treatment condition in a technique for stabilizing a treatment when increasing semi soft coking coal use.

The efficiency of the treatment is evaluated from the flow rate and utilization percentage of the gas analyzed in the radial direction of the blast furnace. On the basis of the evaluated efficiency, the distribution adjustment of the blast furnace charging material may be performed, and the charging material distribution adjustment plan which has the best treatment efficiency may be quickly and accurately obtained. In addition, utility of the charging material may be evaluated accurately by evaluating the treatment efficiency based on the properties or the mixing method of the blast furnace charging materials. In other words, the pellet or sized ore among the charging materials is charged only into the middle portion of the blast furnace in the radial direction, and is not charged into the peripheral portion or the central portion. In this connection, the gas utilization percentage at each position in the radial direction of the blast furnace may be analyzed to accurately evaluate the effect of the gas based on the property thereof. In detail, it is easy to accurately evaluate the effect on the treatment efficiency, such as the permeability, gas utilization percentage, and the like depending on the properties of the pellet or sized ore, by calculating both gas flow rate and gas utilization percentage in the middle portion. Further, it is easy to evaluate the increase of the gas utilization percentage based on a mixing method of nut coke which is mainly used in the blast furnace, so that it may be advantageously used to determine usage amount and use position.

Further, after the collection of the gas is initiated, all of the water further required for the gas purifier may be supplemented with superheated steam contained in the gas. That is, the gas may be cooled to the dew point or below while directly passing through the water and the superheated steam contained in the gas may be phase-changed into a liquid state. Then, the water in the gas purifier may be supplemented at all times by receiving the phase-changed condensed water into the gas purifier and the gas may be purified using the complemented water. Thus, when the operation of the apparatus is initiated, the water required for the gas purifier may be permanently replenished from the gas. That is, the gas purifier may purify the gas while replenishing the water permanently from the gas. From this, the installation structure and operation method of the gas purifier may be simplified and burden on a worker may be reduced.

The embodiments of the present disclosure are set forth for the explanation of the present disclosure and is not set forth for the limitation of the present disclosure. Further, the configurations and schemes proposed in the embodiments of the present disclosure may be combined with each other or may be replaced with each other to be modified in various forms. It should be noted that these variations may be seen in the category of the present disclosure. In other words, the present disclosure will be implemented in a variety of different forms within the scope of claims and equivalents. It will be understood by those skilled in the art that the present disclosure is susceptible to various modifications within the scope and spirit of the present disclosure.

**Claims**

1. A gas treatment apparatus comprising:

   a hollow elongated body capable of passing through a container for a to-be-treated material and having openings defined therein exposed into the container;
   reception tubes respectively connected to the openings to receive gas from the container;
   first detectors respectively installed at the reception tubes and capable of respectively detecting temperatures of gases;
   second detectors respectively connected to the reception tubes and capable of respectively detecting flow rates of gases.

2. The gas treatment apparatus of claim 1, further comprising:

   gas purifiers respectively connected to the reception tubes, wherein the gas purifiers respectively purify the gases respectively received from the reception tubes using water received therein; and
   a third detector connected to the gas purifiers and capable of detecting components of the purified gases.

3. The gas treatment apparatus of claim 2, further comprising:

   a calculating unit for calculating a heat quantity of each of the gases at each of a plurality of positions in the container using the detected gas temperatures and the detected gas flow rates and for calculating an utilization percentage of each of the gases at each of the plurality of positions using the detection results of the components of the purified gases; and
   determining unit for determining a charging condition for each of the positions of a to-be-treated material of an operation using the container using the calculated heat quantity and utilization percentage of each of the gases.

**4.** The gas treatment apparatus of claim 1, further comprising:
a gas feeder installed to supply purge gases respectively to the reception tubes.

**5.** The gas treatment apparatus of claim 1, wherein each of the second detectors uses each of pressures of the gases flowing through the reception tubes to detect the flow rate of each of the gases.

**6.** The gas treatment apparatus of claim 2, wherein each of the gas purifiers further includes:

a gas inlet having an end thereof immersed in water; and
a gas outlet spaced away from the water.

**7.** The gas treatment apparatus of claim 6, wherein each of the gas purifiers includes gas storage configured such that each of the purified gases enters and exits and is stored therein,
wherein each of the gas storages is connected to the gas outlet and the third detector.

**8.** The gas treatment apparatus of claim 2, wherein the container includes a blast furnace; and
wherein the gas includes a blast furnace gas containing a saturated vapor.

**9.** An operation method comprising:

providing a to-be-treated material into a container for a to-be-treated material;
receiving gases from a plurality of positions in the container;
detecting a temperature of each of the gases received from the plurality of positions; and
detecting a flow rate of each of the gases received from the plurality of positions.

**10.** The operation method of claim 9, wherein the operation method further comprises:

passing the gases received from the plurality of positions respectively through gas purifiers receiving water therein, thereby to purify the gases; and
detecting components of each of the purified gases.

**11.** The operation method of claim 10, wherein the operation method further comprises:

calculating a heat quantity of the gas at each of the plurality of positions using the detected gas temperature and the detected gas flow rate and calculating an utilization percentage of each of the gases at each of the plurality of positions using the detection results of the components of the purified gases; and
determining a charging condition of the to-be-treated material into the container at each of the plurality of positions thereof using the calculated heat quantity and utilization percentage of each of the gases.

**12.** The operation method of claim 11, wherein the determining of the charging condition of the to-be-treated material at each of the plurality of positions includes:

comparing the calculated heat quantity of the gas with a reference heat quantity and determining a particle size condition of the to-be-treated material to be charged to each of the positions based on the comparison result; and
comparing the calculated utilization percentage of each of the gases with a reference utilization percentage and determining the particle size condition and a component content condition of the to-be-treated material to be charged to each of the positions based on the comparison result.

**13.** The operation method of claim 10, wherein the purifying of the gases includes:

passing the gases directly through water; and
collecting the gases escaped from the water.

**14.** The operation method of claim 11, wherein the passing of the gases directly through the water includes:

cooling the gases to a temperature equal to or below a dew point to separate condensed water from the gas; and
adding the separated condensed water to the water.

15. The operation method of claim 10, wherein the detecting of the components of each of the purified gases includes:

temporarily storing the purified gases respectively and detecting the components of each of the temporarily stored gases,
wherein the receiving of the gases includes:

receiving each of the gases from the container at each of the positions thereof using reception tubes inserted into the container; and
supplying purge gases respectively into the reception tubes before or after the detecting of the temperature, flow rate, components of the gases.

【FIG. 1】

【FIG. 2】

【FIG. 3】

【FIG. 4】

【FIG. 5】

(a)

(b)

【FIG. 6】

(a)

(b)

[FIG. 7]

GAS FLOW

COKE AMOUNT IN
CENTRAL PORTION

6t
4.5t
3t

CENTRAL GAS PATH
VENTILATION CONTROL

SMALL ORE

LARGE ORE

Coke

DISTANCE FROM CHARGING BASELINE (m)

SMALL PARTICLE
PORTION

MIDDLE PORTION

CENTRAL PORTION

DISTANCE FROM WALL OF FURNACE BODY (m)

## INTERNATIONAL SEARCH REPORT

| International application No. |
| --- |
| **PCT/KR2017/015032** |

### A. CLASSIFICATION OF SUBJECT MATTER

*C21B 7/00(2006.01)i, C21B 7/24(2006.01)i, F27B 1/28(2006.01)i, F27D 21/00(2006.01)i, F27D 21/04(2006.01)i*

According to International Patent Classification (IPC) or to both national classification and IPC

### B. FIELDS SEARCHED

Minimum documentation searched (classification system followed by classification symbols)
C21B 7/00; C21B 5/00; C21B 7/24; F27B 1/28; F27D 21/00; F27D 21/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: blast furnace, gas, temperature, flow velocity, pressure, refinement, impurity, detection

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2004-0095468 A (POSCO) 15 November 2004<br>See pages 3-5, claim 4 and figures 1, 4a-4e. | 1-15 |
| Y | JP 04-350108 A (NIPPON STEEL CORP.) 04 December 1992<br>See paragraphs [0007], [0009], [0014]-[0019], claim 1 and figures 1, 2. | 1-15 |
| Y | KR 10-0862831 B1 (POSCO) 13 October 2008<br>See paragraphs [0031]-[0034], [0051]-[0055], claim 1 and figure 2. | 2,3,6-8,10-15 |
| A | CN 104212924 A (JIANGSU INSTITUTE OF RESEARCH OF IRON AND STEEL. SHA-STEEL CO., LTD.) 17 December 2014<br>See paragraph [0155], claims 1-4 and figure 2. | 1-15 |
| A | KR 10-1257605 B1 (HYUNDAI STEEL COMPANY) 29 April 2013<br>See paragraphs [0034]-[0040] and figure 1. | 1-15 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 APRIL 2018 (26.04.2018) | **26 APRIL 2018 (26.04.2018)** |

| Name and mailing address of the ISA/KR | Authorized officer |
| --- | --- |
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/015032**

| Patent document cited in search report | Publication date | Patent family member | Publication date |
|---|---|---|---|
| KR 10-2004-0095468 A | 15/11/2004 | NONE | |
| JP 04-350108 A | 04/12/1992 | NONE | |
| KR 10-0862831 B1 | 13/10/2008 | NONE | |
| CN 104212924 A | 17/12/2014 | CN 104212924 B | 24/08/2016 |
| | | EP 3190194 A1 | 12/07/2017 |
| | | JP 2017-525854 A | 07/09/2017 |
| | | KR 10-2017-0047377 A | 04/05/2017 |
| | | US 2017-0283891 A1 | 05/10/2017 |
| | | WO 2016-033843 A1 | 10/03/2016 |
| KR 10-1257605 B1 | 29/04/2013 | NONE | |

Form PCT/ISA/210 (patent family annex) (January 2015)

**EP 3 561 082 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020030006123 A
- KR 1020020088475 A
- CN 2014103729571 A
- JP 2013019706 A
- JP 2506485 B
- KR 101323688 B1